# EUROPÄISCHE PATENTSCHRIFT

(11) **EP 1 031 600 B1**
(45) Veröffentlichungstag und Bekanntmachung des Hinweises auf die Patenterteilung: **23.04.2003**
(21) Anmeldenummer: 00100901.8
(22) Anmeldetag: 18.01.2000
(51) Int. Cl.: C08J 9/00, C08J 9/12, C08K 3/04, C08L 25/04

(54) **Schaumstoffplatten mit verminderter Wärmeleitfähigkeit**
Polystyrene foam sheets with low thermal conductivity
Plaques de mousse de polystyrène à faible conductivité thermique

(30) Priorität: 23.02.1999 DE 19907663
(43) Veröffentlichungstag der Anmeldung: 30.08.2000
(73) Patentinhaber: BASF AKTIENGESELLSCHAFT, 67056 Ludwigshafen (DE)
(72) Erfinder: Dietzen, Franz-Josef, Dr., 67071 Ludwigshafen (DE); Ehrmann, Gerd, Dr., 67146 Deidesheim (DE); Turznik, Gerhard, Dr., 67269 Grünstadt (DE); Alicke, Gerhard, 67549 Worms (DE); Hahn, Klaus, Dr., 67281 Kirchheim (DE); McKee, Graham Edmund, Dr., 67433 Neustadt (DE)

(56) Entgegenhaltungen:
- EP-A- 0 778 309
- WO-A-98/51735
- DE-A- 19 531 489
- US-A- 5 650 106
- DATABASE WPI Section Ch, Derwent Publications Ltd., London, GB; Class A13, AN 1998-220047 XP002131627 & JP 09 143322 A (ASAHI KASEI KOGYO KK), 3. Juni 1997 (1997-06-03)

## Beschreibung

Die Erfindung betrifft Schaumstoffplatten mit einer Plattendicke von 5 bis 20 cm auf Basis von Styrolpolymerisaten, die eine verminderte Wärmeleitfähigkeit aufweisen.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Neuerdings werden aus Umweltschutzgründen zur Herstellung von XPS-Platten halogenfreie Treibmittel, vorzugsweise CO₂-haltige Treibmittelgemische, eingesetzt. CO₂ diffundiert aber wesentlich rascher als fluorhaltige Gase aus den Schaumstoffzellen heraus und wird durch Luft ersetzt. Aus diesem Grund ist die Wärmeleitfähigkeit von XPS-Platten, die mit CO₂-haltigen Treibmitteln hergestellt wurden, etwas höher als die von XPS-Platten, die mit Fluorkohlenwasserstoffen hergestellt wurden.

Um die Wärmeleitung von extrudierten Schaumstoffplatten aus Polystyrol zu verringern, kann man dem Polystyrol Stoffe zugeben, die den Strahlungsanteil an der Wärmeleitung verringern. Dazu geeignete Stoffe sind z.B. Aluminiumpulver, Ruß oder Graphit. Sehr effektiv bei der Reduzierung der Strahlung ist dabei Graphit (EP-A 863 175). Ein großer Nachteil von Graphit bzw. Ruß ist, daß sie sehr stark nucleierend wirken. Dadurch lassen sich nur sehr feinzellige Schaumstoffe herstellen. Aufgrund dieser Feinzelligkeit war es bisher nicht möglich, dicke Platten herzustellen, die eine zur merklichen Reduktion des Strahlungsanteils ausreichende Menge Graphit bzw. Ruß enthielten.

Um bei einer ausreichend großen Ruß- bzw. Graphitmenge dicke Platten herzustellen, müßte mit einer gegenüber der normalen Arbeitsweise deutlich vergrößerten Düsenspaltweite geschäumt werden. Die Vergrößerung der Düsenspaltweite ist aber nicht beliebig möglich, da an der Düse ein ausreichender Druck aufrecht erhalten werden muß, um ein Aufschäumen in der Düse zu vermeiden.

Ziel der Erfindung war, bei hohem Anteil an Kohlenstoffpartikeln im Polystyrol dicke Schaumstoffplatten herzustellen.

Unerwartet wurde gefunden, daß bei Zugabe von ultrahochmolekularem Polystyrol zu Standardpolystyrol der Düsendruck deutlich ansteigt. Dadurch bedingt kann die Düsenspaltweite deutlich vergrößert werden, ohne daß es zu einem Aufschäumen in der Düse kommt. Mit dieser deutlich größeren Düsenspaltweite lassen sich dann, trotz großer Feinzelligkeit, dicke Platten herstellen.

Gegenstand der Erfindung sind demzufolge Schaumstoffplatten mit einer Dicke von 5 bis 20 cm auf Basis von Styrolpolymerisaten, die 0,1 bis 10 %, bezogen auf ihr Gewicht, Graphit partikel mit einer mittleren Teilchengrösse von 1-100 µm enthalten, wobei die Styrolpolymerisat-Matrix besteht aus
A. 99 bis 80 Gew.-% eines Styrolpolymerisats mit einem mittleren Molekulargewicht Mw von weniger als 500000 und
B. 1 bis 20 Gew.-% eines Styrolpolymerisats mit einem mittleren Molekulargewicht Mw von mehr als 1000000.

Die Dichte der Schaumstoffplatten beträgt vorzugsweise 20 bis 200 g/l, ihre Dicke beträgt 5 bis 20 cm.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen und Ethern.

Bevorzugte Treibmittelgemische sind daher:

| | | |
|---|---|---|
| a) | 1 bis 100 Gew.-% | Kohlendioxid, |
| b) | bis zu 95 Gew.-% | eines Ethers aus der Gruppe Dimethylether, Methylethylether und Methylvinylether, |
| c) | bis zu 60 Gew.-% | eines Alkohols oder Ketons mit einem Siedepunkt zwischen 56 und 100°C und |
| d) | bis zu 30 Gew.-% | eines aliphatischen C₃-C₆-Kohlenwasserstoffs. |

Besonders bevorzugte Treibmittelgemische bestehen aus:

| | | |
|---|---|---|
| a) | 20 bis 95 Gew.-% | Kohlendioxid, |
| c) | 80 bis 5 Gew.-% | Ethanol und |
| d) | 0 bis 10 Gew.-% | eines aliphatischen C₃-C₆-Kohlenwasserstoffs. |

Auch Kohlendioxid allein kann eingesetzt werden.

Die Treibmittel werden in einer Menge von 3 bis 15 Gew.-%, vorzugsweise 4 bis 12 Gew.-%, bezogen auf das Styrolpolymerisat, verwendet.

Die Schaumstoffplatten enthalten zur Verminderung der Wärmeleitfähigkeit 0,1 bis 10, insbesondere 0,5 bis 5 Gew.-%, Graphit, bezogen auf das Styrolpolymerisat, mit einer mittleren Teilchengröße von 1 bis 100 µm, insbesondere von 2 bis 40 µm.

Als weitere übliche Zusatz- und/oder Hilfsstoffe können der Polystyrolmatrix Flammschutzmittel, Antistatika, Stabilisatoren, Farbstoffe, Füllstoffe und/oder Keimbildner in üblichen Mengen zugesetzt werden.

Als Polymermatrix enthalten die Schaumstoffplatten erfindungsgemäß eine Mischung aus
A. 80 bis 99 Gew.-%, vorzugsweise 90 bis 98 Gew.-%, Standardpolystyrol mit einem mittleren Molekulargewicht (Gewichtsmittel) von weniger als 500000, insbesondere von 100000 bis 350000 und
B. 20 bis 1 Gew.-%, vorzugsweise 10 bis 2 Gew.-%, eines ultrahochmolekularen Polystyrols mit einem mittleren Molekulargewicht (Gewichtsmittel) von mehr als 1000000, insbesondere von 1200000 bis 3500000.

Derartige ultrahochmolekulare Polystyrole sind an sich bekannt. Sie werden bevorzugt hergestellt durch anionische Polymerisation von Styrol mit lithiumorganischen Initiatoren in einem Kohlenwasserstofflösungsmittel.

Auch durch radikalische Polymerisation können sie erhalten werden, z.B. durch Polymerisation von Styrol in wäßriger Suspension mit Hilfe von Radikalinitiatoren, die in verhältnismäßig geringen Mengen eingesetzt werden.

Ein geeignetes Handelsprodukt ist BLENDEX 28270 der Fa. General Electric mit einem mittleren Molekulargewicht MW von ca. 2900000.

Die Schaumstoffplatten können dadurch hergestellt werden, daß man ein Gemisch aus dem Styrolpolymerisat, 3 bis 15 Gew.-% des Treibmittels und 0,1 bis 10 Gew.-% Graphit, sowie den weiteren, oben beschriebenen Zusatzstoffen extrudiert und verschäumt. Wesentlich ist, daß dabei die Zusatzstoffe homogen in der Styrolpolymerisat-Matrix verteilt werden.

Die in dem folgenden Beispiel genannten Prozente beziehen sich auf das Gewicht:

### Beispiel

Die Schaumstoffproben wurden auf einer Tandemanlage extrudiert. Diese besteht aus einem Doppelschneckenextruder ZKS 53 und einem Einschneckenkühlextruder (KE 90).

Polymer und Zusatzstoffe werden der ZKS 53 (Schneckendurchmesser 53 mm) zugeführt. Das Polymere wird aufgeschmolzen und die Treibmittel werden eingemischt. Die treibmittelhaltige Schmelze wird dann im zweiten Extruder (KE 90, Schneckendurchmesser 90 mm) auf die zu Schäumen notwendige Temperatur von 124°C abgekühlt.

Der Durchsatz (PS) betrug 50 kg/h, die Düse hatte eine Breite von 70 mm, die Düsenplatte wurde zwischen 1,5 und 2,5 mm variiert. Als Treibmittel wurde eine Kombination auf 3,5 % CO₂ und 3,25 % Ethanol verwendet. Dem Polystyrol (MW ca. 190000) wurde Graphitpulver (AF spez 96-97, mittlere Teilchengröße 6 µm, der Firma Graphitwerk Kropfmühle) und ultrahochmolekulares Polystyrolpulver (Blendex 28270, MW ca. 2,9 Mio, der Firme GE) zugegeben.

| Versuch | PS [%] | Blendex [%] | Graphit [%] | Düsensplat [mm] | Düsendruck [bar] | Plattendicke [mm] | mittlere Zellzahl [1/mm] | Schaum-Qualität |
|---|---|---|---|---|---|---|---|---|
| 1 | 100 | | | 1,5 | 90 | 60 | 4,0 | Gut |
| 2 | 100 | | 1,0 | 1,5 | 90 | 35 | 9,0 | Gut |
| 3 | 100 | | 1,0 | 2,5 | 67 | - | - | Schlecht |
| 4 | 94 | 6 | 1,0 | 2,5 | 92 | 65 | 9,0 | Gut |

- Versuch 1:: Ohne Graphit läßt sich aus der Düse mit 1,5 mm Spaltweite eine Platte von 60 mm Dicke herstellen. Die Schaumqualität ist gut.
- Versuch 2:: Mit Graphit wird der Schaum feinzelliger. Es läßt sich aus der Düse mit 1,5 mm Spaltweite nur noch eine Platte von 35 mm Dicke herstellen. Die Schaumqualität ist gut.
- Versuch 3:: Wird die Düse auf eine Spaltweite von 2,5 mm geöffnet, so sinkt der Druck soweit ab, daß sich kein Schaum mit guter Qualität mehr erzeugen läßt. Die Oberfläche ist aufgerissen, im Schaum befinden sich Lunker.
- Versuch 4:: (erfindungsgemäß)
Wird bei der Spaltweite von 2,5 mm das ultrahochmolekulare Polystyrol zugegeben, so steigt der Druck an der Düse deutlich an. Es läßt sich auch bei dieser Spaltweite Schaum mit guter Qualtität erzeugen. Die Oberfläche ist geschlossen, die Schaumstruktur ist feinzellig, homogen und geschlossenzellig. Es lassen sich feinzellige Platten mit einer Dicke von 65 mm herstellen.

## Patentansprüche

1. Schaumstoffplatten mit einer Dicke von 5 bis 20 cm auf Basis von Styrolpolymerisaten, die 0,1 bis 10 %, bezogen auf ihr Gewicht, Graphitpartikel mit einer mittleren Teilchengröße von 1 bis 100 µm enthalten, **dadurch gekennzeichnet, daß** die Styrolpolymerisat-Matrix aus
A. 98 bis 90 Gew.-% eines Styrolpolymerisats mit einem mittleren Molekulargewicht M_{w} von weniger als 500000 und
B. 2 bis 10 Gew.-% eines Styrolpolymerisats mit einem mittleren Molekulargewicht M_{w} von mehr als 1000000, besteht.

2. Schaumstoffplatten nach Anspruch 1, **dadurch gekennzeichnet, daß** das Styrolpolymerisat B durch anionische oder radikalische Polymerisation hergestellt wurde.

3. Schaumstoffplatten nach Anspruch 1, **dadurch gekennzeichnet, daß** sie geschlossene Zellen enthalten, die frei von halogenhaitigen Gasen sind.

4. Verfahren zur Herstellung der Schaumstoffplatten nach Anspruch 1, bei dem man ein Gemisch aus einem Styrolpolymerisat, 3 bis 15 Gew.-% eines flüchtigen Treibmittels und 0,1 bis 10 Gew.-% Graphitpartikel mit einer mittleren Teilchengröße von 1 bis 100 µm, jeweils bezogen auf das Styrolpolymerisat, bei Temperaturen oberhalb des Schmelzpunktes des Styrolpolymerisats extrudiert und verschäumt, **dadurch gekennzeichnet, daß** das Styrolpolymerisat eine Mischung aus
A. 99 bis 80 Gew.-% eines Styrolpolymerisats mit einem mittleren Molekulargewicht M_{w} von weniger als 500000 und
B. 1 bis 20 Gew.-% eines Styrolpolymerisats mit einem mittleren Molekulargewicht M_{w} von mehr als 1000000 ist.

## Claims

1. A foam board having a thickness of from 5 to 20 cm based on styrene polymers containing from 0.1 to 10%, based on their weight, of graphite particles having a mean particle size of from 1 to 100µm, wherein the styrene polymer matrix consists of
A. from 98 to 90% by weight of a styrene polymer having a mean molecular weight M_{w} of less than 500,000, and
B. from 2 to 10% by weight of a styrene polymer having a mean molecular weight M_{w} of greater than 1,000,000.

2. A foam board as claimed in claim 1, wherein the styrene polymer B has been prepared by anionic or free-radical polymerization.

3. A foam board as claimed in claim 1, which comprises closed cells which are free from halogen-containing gases.

4. A process for the production of a foam board as claimed in claim 1, in which a mixture of a styrene polymer, from 3 to 15% by weight of a volatile blowing agent and from 0.1 to 10% by weight of graphite particles having a mean particle size of from 1 to 100µm, in each case based on the styrene polymer, are extruded and foamed at temperatures above the melting point of the styrene polymer, wherein the styrene polymer is a mixture of
A. from 99 to 80% by weight of a styrene polymer having a mean molecular weight M_{w} of less than 500,000, and
B. from 1 to 20% by weight of a styrene polymer having a mean molecular weight M_{w} of greater than 1,000,000.

## Revendications

1. Plaques de mousse d'une épaisseur de 5 à 20 cm à base de polymères de styrène, qui contiennent de 0,1 à 10%, par rapport à leur poids, de particules de graphite d'une taille moyenne de particules de 1 à 100 µm, **caractérisées en ce que** la matrice de polymère de styrène consiste en
A. 98 à 90% en poids d'un polymère de styrène d'un poids moléculaire moyen M_{w} inférieur à 500000 et
B. 2 à 10% en poids d'un polymère de styrène d'un poids moléculaire moyen M_{w} supérieur à 1000000.

2. Plaques de mousse selon la revendication 1, **caractérisées en ce que** le polymère de styrène B a été préparé par polymérisation anionique ou radicalaire.

3. Plaques de mousse selon la revendication 1, **caractérisées en ce qu'**elles contiennent des alvéoles fermées exemptes de gaz halogénés.

4. Procédé de production des plaques de mousse selon la revendication 1, dans lequel on extrude et on expanse un mélange constitué d'un polymère de styrène, de 3 à 15% en poids d'un agent porogène volatil et de 0,1 à 10% en poids de particules de graphite d'une taille moyenne de particules de 1 à 100 µm, à chaque fois par rapport au polymère de styrène, à des températures supérieures au point de fusion du polymère de styrène, **caractérisé en ce que** le polymère de styrène est un mélange constitué de
A. 99 à 80% en poids d'un polymère de styrène d'un poids moléculaire moyen M_{w} inférieur à 500000 et
B. 1 à 20% en poids d'un polymère de styrène d'un poids moléculaire moyen M_{w} supérieur à 1000000.
